(19) **Europäisches Patentamt / European Patent Office / Office européen des brevets**

(11) **EP 2 383 949 B1**

(12) ## EUROPEAN PATENT SPECIFICATION

(45) Date of publication and mention
of the grant of the patent:
**06.01.2016 Bulletin 2016/01**

(51) Int Cl.:
***H04B 10/61*** *(2013.01)*    ***H04L 27/227*** *(2006.01)*

(21) Application number: **10161450.1**

(22) Date of filing: **29.04.2010**

(54) **Method and arrangement for signal processing in a communication system**

Verfahren und Vorrichtung zur Signalverarbeitung in einem Kommunikationssystem

Procédé et dispositif pour le traitement des signaux dans un système de communication

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**02.11.2011 Bulletin 2011/44**

(73) Proprietor: **Xieon Networks S.à r.l.
2633 Senningerberg (LU)**

(72) Inventors:
• **Kuschnerov, Maxim
80339, München (DE)**
• **Spinnler, Bernhard
82041, Oberhaching (DE)**
• **Lankl, Berthold
85658, Egmating (DE)**
• **Napoli, Antonio
80637, München (DE)**
• **Calabro, Stefano
81375, München (DE)**

(74) Representative: **Lucke, Andreas et al
Boehmert & Boehmert
Anwaltspartnerschaft mbB
Patentanwälte Rechtsanwälte
Pettenkoferstrasse 20-22
80336 München (DE)**

(56) References cited:
• **ZHANG S ET AL: "ADC bandwidth optimization in coherent optical polarization multiplexing quadrature phase-shift keying system", COMMUNICATIONS AND PHOTONICS CONFERENCE AND EXHIBITION, 2009. ACP 2009. ASIA, IEEE, PISCATAWAY, NJ, USA, 2 November 2009 (2009-11-02), pages 1-6, XP031623336, ISBN: 978-1-55752-877-3**
• **ROUDAS I ET AL: "Optimal Polarization Demultiplexing for Coherent Optical Communications Systems", JOURNAL OF LIGHTWAVE TECHNOLOGY, IEEE SERVICE CENTER, NEW YORK, NY, US, vol. 28, no. 7, 1 April 2010 (2010-04-01), pages 1121-1134, XP011296992, ISSN: 0733-8724**
• **FULVIO GINI ET AL: "Generalized Differential Encoding: A Nonlinear Signal Processing Perspective", IEEE TRANSACTIONS ON SIGNAL PROCESSING, IEEE SERVICE CENTER, NEW YORK, NY, US, vol. 46, no. 11, 1 November 1998 (1998-11-01), XP011058334, ISSN: 1053-587X**
• **DIRK VAN DEN BORNE ET AL: "POLMUX-QPSK modulation and coherent detection: The challenge of long-haul 100G transmission", 35TH EUROPEAN CONFERENCE ON OPTICAL COMMUNICATION, 2009. ECOC '09, VIENNA, AUSTRIA, IEEE, PISCATAWAY, NJ, USA, 20 September 2009 (2009-09-20), pages 1-4, XP031546308, ISBN: 978-1-4244-5096-1**

EP 2 383 949 B1

**Description**

**FIELD OF THE INVENTION**

The invention refers to a method and to an arrangement for signal processing in a communication system (e.g. an optical communication system).

**BACKGROUND OF THE INVENTION**

In order to meet the growing demand for internet bandwidth with traffic growth rates around 40-50% per year, telecommunication component providers face the task of increasing the spectral efficiency of fiber utilization. After 10Gbit/s systems became successful in the 1990's, solutions for 40Gbit/s became available in the last years. Standardization and research are now focused on the development of 100Gbit/s systems with coherent Polarization Multiplexed (PolMux) Quadrature Phase Shift Keying (QPSK). Since polarization multiplexing utilizes both light polarizations, it is possible to send the signal at a rate of ~25-28Gsymbols per second, thus fitting nicely into the standard 50GHz grid for DWDM optical systems. Coherent reception makes it possible to compensate for most linear transmission impairments, like Chromatic Dispersion (CD) and Polarization-Mode Dispersion (PMD) after sampling in the digital domain.

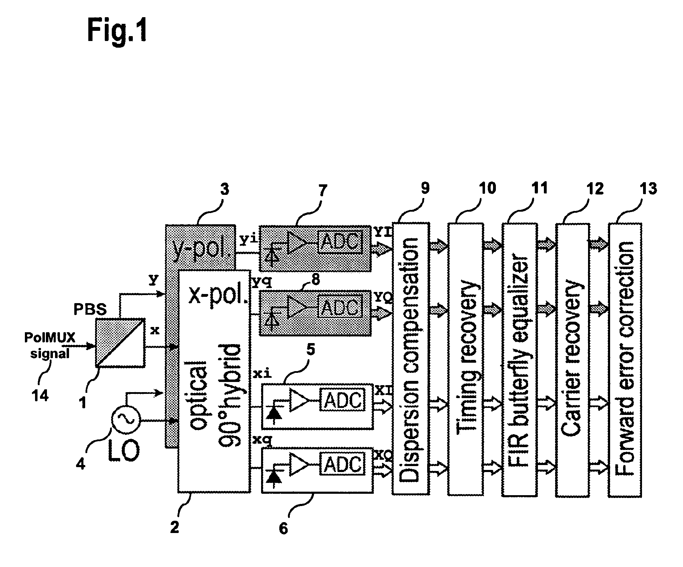

Figure 1 shows a conventional coherent receiver for polarization multiplex signals. A received polarization division multiplex signal (PolMUX signal) 14 comprising two orthogonal optical signals is split by a Polarisation Beam Splitter(PBS) 1 into two orthogonal component signals x and y. Each of these component signals is split by optical 90°-hybrids 2 and 3 into an in-phase component (xi; yi) and a quadrature-phase component (xq; yq). Therefore frequency and phase of a local carrier generated by a local oscillator (LO) 4 must be adjusted by a carrier recovery unit 12 to agree with that of the received PolMUX signal. After analogue-to-digital conversion by AD-converters (ADC) 5 - 8 a sampled and quantized representation of the received optical signal is available in digital form referred to as component values XI, XQ; YI, YQ. Such values contain statistic noisy distortions, deterministic channel degradations such as chromatic dispersion, and random time-varying distortions mainly due to polarization effects. A dispersion compensation unit 9 is usually added for first coarse chromatic dispersion compensation. In addition, a clock recovery subsystem 10 is necessary for extracting a correct sampling clock frequency and a correct sampling clock phase from the received signal. Adaptive equalization 11 estimates the channel and removes deterministic channel distortions. Then, the carrier recovery 12 corrects the phase offset caused by the local oscillator (LO) 4. Finally, forward error correction (FEC) 13 is used to correct for statistical errors.

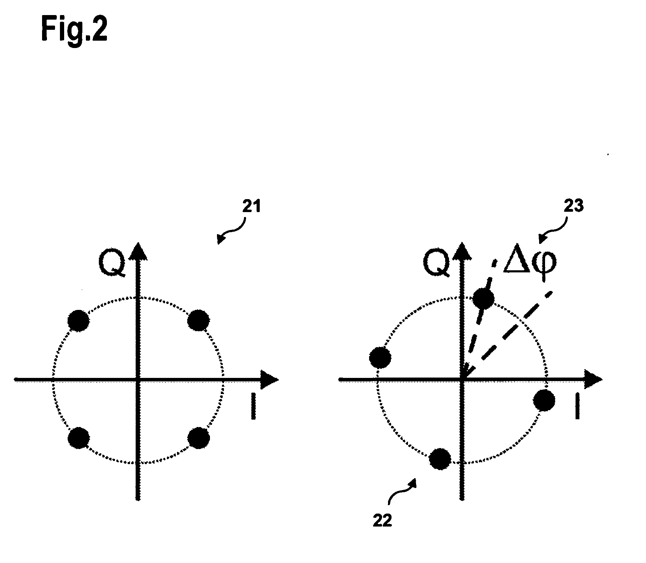

Figure 2 shows the rotation of a Quadrature Phase Shift Keying (QPSK) constellation diagram relative to either polarization component x or y in presence of a phase offset $\Delta\varphi(t)$ introduced by the transmitter and receiver laser to the signal. Writing the analog signal $E_{in}(t)$ in the complex base-band, a phase offset $\Delta\varphi(t)$ can be modelled by $E_{out}(t) = E_{in}(t)e^{j\Delta\varphi}$. In more detail Figure 2 shows the Quadrature Phase Shift Keying (QPSK) constellation diagram 21 without the phase rotation and the Quadrature Phase Shift Keying (QPSK) constellation 22 in presence of the phase offset $\Delta\varphi(t)$ 23.

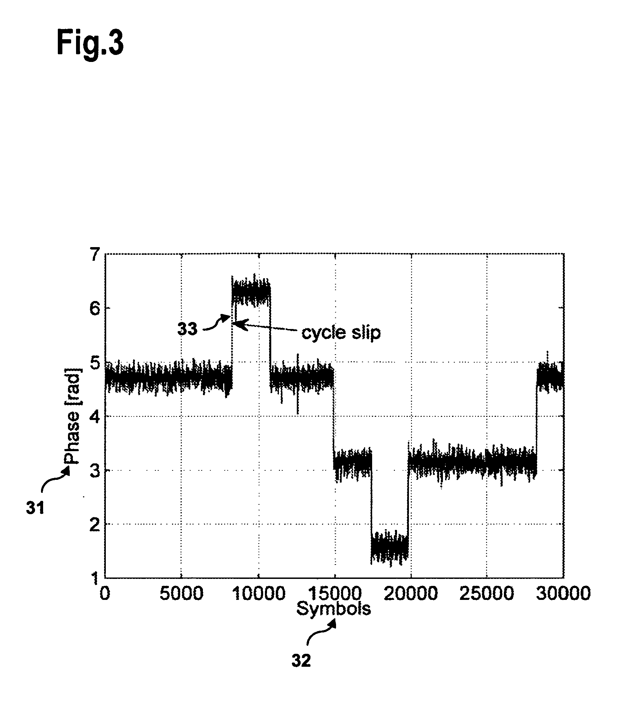

Figure 3 shows an example of a cycle slip for a Quadrature Phase Shift Keying (QPSK) system in presence of a constant phase offset $\Delta\varphi(t)$. In more detail Figure 3 shows the phase 31 (rad) as a function of the number of received symbols 32 and an example of a cycle slip 33. A cycle slip occurs if the signal constellation is rotated by $\pm90°$, 180°. Depending on the signal-to-noise ratio (SNR) and the laser phase noise, there is a finite probability that cycle slips occur. All the subsequent phase estimates are offset by the degree of the cycle slip and decoded incorrectly in a coherent system. This can lead to burst errors thus making a stable communication impossible. The probability of cycle slips can be reduced by using lasers with a narrower linewidth or by increasing the SNR, which may lead to more expensive communication systems.

A much simpler way to combat cycle slips can be obtained by introducing differential encoding to the signal. In conventional differential formats, the bit information is modulated onto the phase difference between two or more subsequent symbols. For example, in differentially encoded Binary Phase-Shift Keying (BPSK) systems a binary "1" may be transmitted by adding 180° to the current phase and a binary "0" by adding 0° to the current phase. In differentially encoded QPSK, the phase-shifts are 0°, 90°, 180°, -90° corresponding to data "00", "01", "11", "10". If a cycle slip occurs, it leads to a single symbol error only, since it's the differential phase which carries the information.

However, binary differential decoding may lead to a performance loss, as every bit error in the coherent domain is translated to two bit errors after differential decoding at relevant signal-to-noise ratio (SNR) values. The binary decoding algorithm can be given by:

$$z_I(t) = \mathrm{Re}\left\{\mathrm{sgn}\left(r(t)\right)\mathrm{sgn}\left(r^{\ast}(t-T)\right)\right\}; \quad z_Q(t) = \mathrm{Im}\left\{\mathrm{sgn}\left(r(t)\right)\mathrm{sgn}\left(r^{\ast}(t-T)\right)\right\} \qquad (1)$$

where $r(t)$ is the coherent complex signal and $z(t)$ is the complex differentially decoded signal with $z_I(t)$ being the real part or the in-phase, $z_Q(t)$ being the imaginary part or the quadrature, and T is the symbol duration.

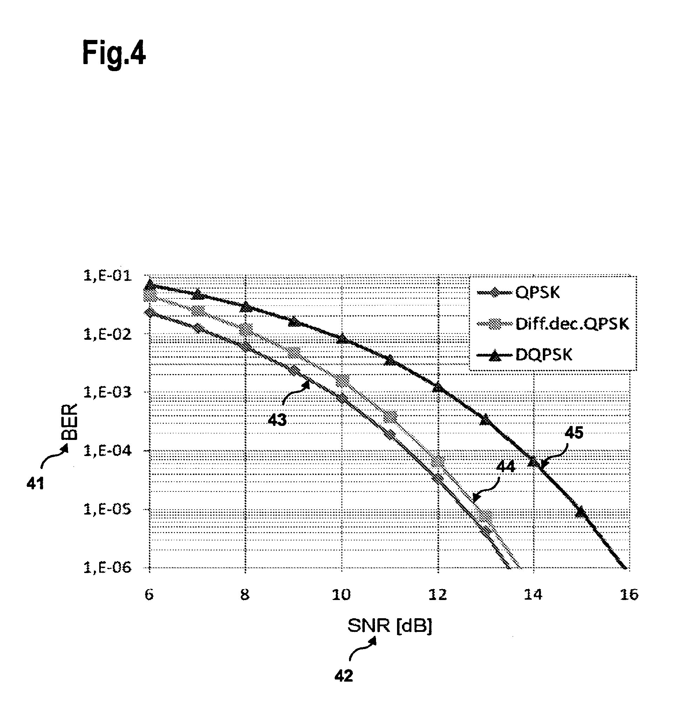

Figure 4 illustrates the bit error rate (BER) of a Quadrature Phase Shift Keying (QPSK) 43 compared with a binary differentially decoded QPSK 44 and with a standard soft decoding (incoherent demodulation) of QPSK 45(DQPSK). In more detail Figure 4 shows that the loss by binary differentially decoded QPSK 44 with respect to Phase Shift Keying (QPSK) is about ~0.7dB at a BER of 5e-3. The loss itself is not as relevant in the first place as the implication of differential decoding itself. As shown in Figure 1, in the coherent receiver, the carrier recovery stage 12 is followed by the Forward error Correction (FEC) stage 13. Generally, coding benefits from soft information, whenever a quantized version of the output signal is used for decoding instead of hard-decision bits. In this way, the decoding algorithm can utilize information of the symbol uncertainty in order to improve decoding performance. At coding overheads of ~7% that are common in optical communication, the soft decoding channel capacity is ~1dB higher than the hard decision channel capacity. However, there is the problem of transferring soft-information of differentially encoded QPSK from the coherent to the differentially decoded domain. Figure 4 shows that the standard soft decoding of QPSK (DQPSK) 45 leads to a significant penalty compared with binary differentially decoded QPSK 44 of ~1.7dB at a BER of 5e-3.

The output signal of the DQPSK decoder is given by:

$$z_I(t) = \mathrm{Re}\left\{r(t)\, r^{\bullet}(t-T)\right\}; \quad z_Q(t) = \mathrm{Im}\left\{r(t)\, r^{\bullet}(t-T)\right\} \qquad (2)$$

Binary differential decoding of QPSK has a limited decoding penalty, less than soft differential decoding, but suffers a performance loss in combination with hard-decision FEC that is inferior to soft-decision counterparts. Another possibility would be to avoid differential encoding altogether. However this approach would require stable lasers and generally leads to increased system costs.

In the wireless systems literature it has been shown that the differential encoding penalty of general PSK modulation formats can be completely compensated using iterative decoding. Cited for example are D. Marsland, P. T. Mathiopoulos, "On the Performance of Iterative Noncoherent Detection of Coded M-PSK Signals", IEEE Transactions on Communications, vol. 48, no. 4, pp.588-596, April 2000; Peter Hoeher, Senior Member, IEEE, and John Lodge, ""Turbo DPSK": Iterative Differential PSK Demodulation and Channel Decoding", IEEE Transactions on Communications, vol. 47, no. 6, pp.837-843, June 1999; and H. Arslan, G.E. Bottomley, R. Ramesh, G. Brismark, "Coherent MAP Detection of DQPSK Signals in non-ISI Channels", Wireless Communications and Networking Conference, 1999. WCNC. 1999 IEEE. In the cited documents the differential decoder is regarded as the inner code of a serially concatenated code structure. The outer code is a convolutional code with error correction capabilities. Using the turbo principle, soft information is iterated between the differential decoder and the outer code employing an interleaver in between. The soft decision is computed according to the maximum a posteriori (MAP) principle. In principle, it is possible to replace the convolutional code by a soft output low density parity check (LDPC) or turbo code with a low overhead, as they are typically used in fiber optics, in order to compensate for the differential penalty. However, this has neither been demonstrated in fiber optic literature, nor has an assessment of the complexity increase taken place. Further examples for the mitigation of the differential encoding are given in L. Lampe et al., "Coded Modulation for DPSK on Fading Channels", Globecom 99, where multi-level coding is used in combination with convolutional codes, and in H. Leib et al., "Data-Aided Noncoherent Demodulation of DPSK", IEEE Trans. Comm. Vol.43 (1995), pp.722 and S. Calabrò et al., "Improved Detection of differential Phase Shift Keying through Multi-Symbol Phase Estimation", ECOC 2005, where recursive structures are employed that however cannot be implemented in parallelized receivers.

The problem to be solved is to avoid the disadvantage mentioned above and in particular to reduce the performance loss of the soft differential decoding of QPSK in the combination with Forward error Correction (FEC). A cost efficient technique is needed that approaches the optimal performance of soft differential decoding of QPSK in the combination with Forward error Correction (FEC) without the complexity of MAP computation and iterative decoding, and which can be easily implemented in parallelized receivers.

Zhang et al: "ADC bandwidth optimization in coherent optical polarization multiplexing quadrature phase-shift keying system", Communications and Photonics Conference and Exhibition 2009, 2.11.2009, pages 1-6, XP031623336, ISBN: 978-1-55752-877-3 analyses bit resolution and bandwidth of analog-to-digital converters in the presence of chromatic dispersion in a 112 Gbit/s PolMux QPSK system. Differential coding/decoding or forward error correction educing the bit error rate is not applied.

Roudas et al: "Optimal Polarization Demultiplexing for Coherent Optical Communications Systems", Journal of Lightwave Technology, IEEE,vol. 28, no. 7, 1.4.2010, pages 1121-1134, XP011296992, ISSN: 0733-8724 focuses on demultiplexing of an optical QPSK signal. The primary goal of this paper is the optimal design, using the maximum-likelihood criterion, of polarization-diversity coherent optical receivers for polarization-multiplexed optical signals, in the absence of polarization mode dispersion (PMD). It is shown that simultaneous joint estimation of the symbols, over the two received states of polarization, yields optimal performance, in the absence of phase noise and intermediate frequency offset.

Fulvio et al: "Generalized Differential Encoding: A Nonlinear Signal Processing Perspective", IEEE Transactions on Signal processing, vol. 46, no. 11, 1.11.1998, XP011058334, ISSN: 1053-587X focuses on differential coding/decoding of differrent modulation schemes. In this article, incoherent detection based on differential encoding has been successfully applied to phase-shift-keying (PSK) signals because it eliminates the need for carrier phase acquisition and tracking at the receiver. This paper generalizes the idea of differential encoding by using a nonlinear transformation called multilag high-order instantaneous moment (ml-HIM). The ml-RIM decoder is capable of removing the effects of phase ambiguity, Doppler frequency, Doppler rate, and even higher order phase distortions. The degrees of freedom offered by the different lags is exploited to optimize system performance. In addition to the classical M-ary FSK, the generalized differential encoding idea is also applied to nonconstant modulus constellations, such as Mary QAM and AM-PM.

Suggestions to improve the error rate of differential PSK are not made.

## SUMMARY OF THE INVENTION

In order to overcome the above-described need in the art, the present invention discloses a signal processing method for coherent receivers receiving a coherent complex signal and extracting orthogonal in-phase and quadrature signal components from the coherent complex signal, characterised by the steps of

clipping and quantizing each orthogonal signal component independently and optimized with respect to a forward error correction algorithm obtaining clipped and quantized orthogonal signal components;

combining said quantized and clipped orthogonal signal components obtaining a first signal;

soft differential decoding the first signal obtaining a decoded second signal; and

applying the forward error correction algorithm to the second signal.

It is also an embodiment, that the first signal (61) includes a real part (693) and an imaginary part.

In the embodiment, the signal processing method further applies a clipping level of 0.6 and 2 or 3 bits for quantization.

In other embodiments of the present invention, the coherent complex signal is supplied by a carrier recovery unit.

In a further embodiment, the step of soft differential decoding the first signal obtaining a second signal includes the steps of time-delaying the first signal obtaining a third signal, complex conjugating the third signal obtaining a fourth signal, multiplying the fourth signal with the first signal obtaining a fifth signal, and phase shifting the fifth signal obtaining the second signal.

In a next embodiment, the coherent complex signal includes a Quadrature Phase Shift Keying (QPSK) signal.

It is also an embodiment, that the signal processing method further comprises the step of clipping the orthogonal signal components independently.

In a further embodiment, the step of quantizing the orthogonal signal components independently includes linear quantization of the orthogonal signal components.

In an alternative embodiment, the step of quantizing the orthogonal signal components independently includes non linear quantization of the signal components.

In other embodiments of the present invention, the non linear quantization of the orthogonal signal components includes compression of the orthogonal signal components.

In a next embodiment of the invention, the non linear quantization of the orthogonal signal components includes expansion of the orthogonal signal components.

The problem stated above is also solved by a signal processing arrangement for coherent receivers comprising means for receiving a coherent complex signal and means for extracting orthogonal in-phase and quadrature signal components from the coherent complex signal, characterised by:

means for clipping and quantizing the orthogonal in-phase and quadrature signal components independently and optimized with respect to a forward error correction algorithm;

means for combining the quantized and clipped orthogonal signal components obtaining a first signal, wherein the first signal includes a real part and an imaginary part;

means for soft differential decoding the first signal obtaining a decoded second signal; and

a forward error correction unit receiving the decoded second signal.

In a next embodiment, the means for clipping and quantizing the orthogonal signal components independently include an expander unit configured to perform expansion of the orthogonal signal components.

The problem stated above is also solved by a receiver of a communication system including the signal processing arrangement described above.

## BRIEF DESCRIPTION OF THE DRAWINGS

The invention is explained by way of example in more detail below with the aid of the attached drawings.

FIG 1 a high level block diagram which shows a conventional coherent receiver for polarization multiplex signals.

Figure 2 is an illustration which shows the rotation of a Quadrature Phase Shift Keying (QPSK) constellation diagram in presence of a phase offset.

Figure 3 is an illustration which shows a cycle slip for a Quadrature Phase Shift Keying (QPSK) system.

Figure 4 illustrates the bit error rate (BER) of a Quadrature Phase Shift Keying (QPSK) compared with a binary differentially decoded QPSK and with a standard soft decoding of QPSK (DQPSK).

Figure 5 is a high level block diagram which illustrates the signal processing arrangement and the method of processing a coherent complex signal according to an embodiment of the invention.

Figure 6 is high level block diagram which illustrates the soft decision code I.5 from the fiber optic communication standard ITU-T G.975.1.

Figure 7 illustrates the performance of the soft differential decoding method in combination with a soft decision forward error correction (FEC) according to an embodiment of the invention.

## DESCRIPTION OF THE INVENTION

As regards the description of Figures 1 to 4, reference is made to the background of the invention.

Illustrative embodiments will now be described with reference to the accompanying drawings to disclose the teachings of the present invention. While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

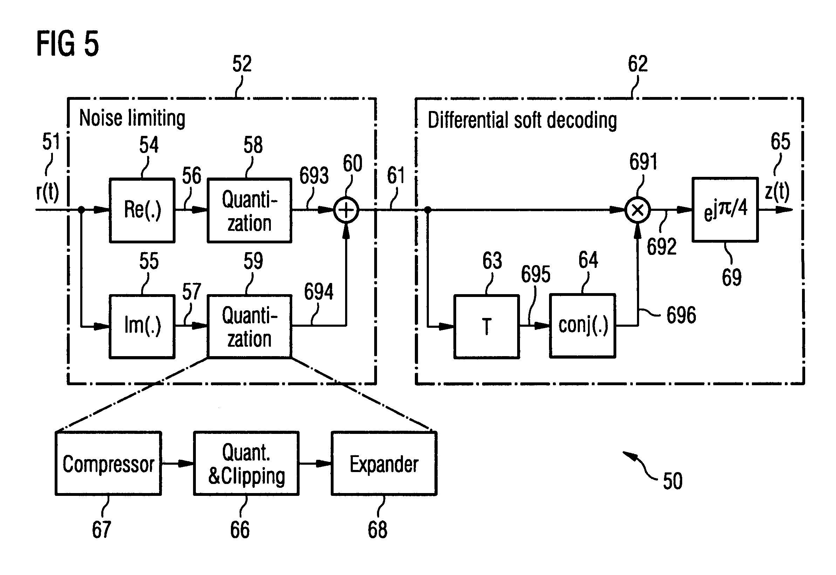

Figure 5 is high level block diagram (50) which illustrates the signal processing arrangement and the method of processing a coherently demodulated complex signal $r(t)$ according to an embodiment of the invention. The coherently demodulated complex signal $r(t)$ is fed from a carrier recovery unit (for example the carrier recovery unit 12 shown in Figure 1) to a noise limiting unit 52. The in-phase component 56 of the coherent complex signal $r(t)$ is extracted by the in-phase component extractor unit 54 and quantized by the quantization unit 58. Independently from the in-phase component, the quadrature component 57 of the coherent complex signal $r(t)$ is extracted by the quadrature component extractor 55 and quantized by the quantization unit 59. The in-phase component 56 and the quadrature component 57 of the coherently demodulated complex signal $r(t)$ are combined (60) as real (693) and imaginary (694) part of a complex number, respectively, by the combiner 60. The resulting signal 61 is then fed to a differential soft decoding unit 62 where differential soft decoding of the signal 61 is performed. In particular the signal 61 is fed to a time delay unit 63 which introduces a time delay T. The output 695 of the time delay unit 63 is then fed to a complex conjugate unit 64. The output 696 of the complex conjugate unit 64 is then multiplied with the signal 61 by the multiplier 691. The resulting signal 692 is fed to a n/4 phase shifter 69. The output of the phase shifter $z(t)$ 65 can then be processed by an error decoding module, (for example the forward error correction (FEC) unit 13 shown in Figure 1).

In another embodiment of the invention, also shown in Figure 5, the quantization units 58 and 59 further include a clipping unit, so that each of the quantization unit 58 and 59 can also be named quantization and clipping unit 66. The clipping in combination with quantization leads to a significant noise reduction compared to standard soft differential decoding.

According to an embodiment of the invention the quantization units 58 and 59 perform a linear quantization.

In another embodiment of the invention, also shown in Figure 5, the quantization performed by quantization units 58 and 59 can be non linear. In particular nonlinear mapping functions units can be included before and after the linear quantization and clipping units 66, in particular a compressor unit 67 is included before the quantization and clipping units 66 and an expander unit 68 is included after the quantization and clipping units 66. Further benefits can be gained by using the nonlinear mapping functions units 67 and 68. The optimum clipping amplitude and nonlinear mapping functions depend on the type of forward error correction (FEC).

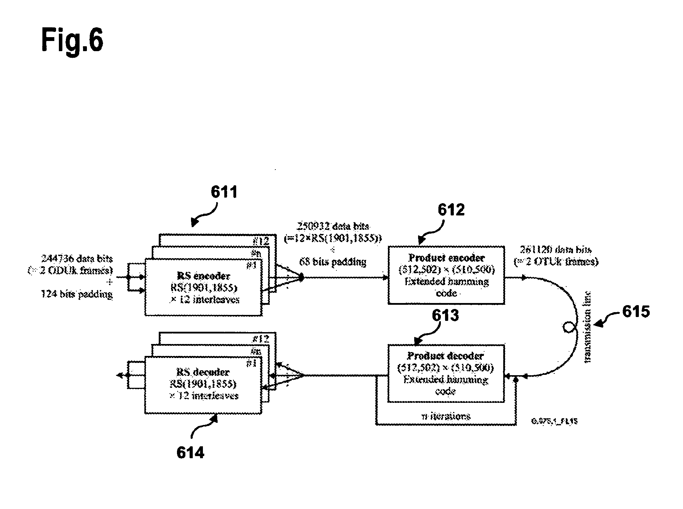

Figure 6 is high level block diagram which illustrates the soft decision code I.5 from the fiber optic communication standard ITU-T G.975.1. In particular Figure 6 shows a Reed-Solomon encoder unit 611, a Product encoder unit 612, a transmission line 615, a Product decoder unit 613 and a Reed-Solomon decoder unit 614. The performance of the soft differential decoding of DQPSK according to an embodiment of the invention is demonstrated on the soft decision code I.5 from the fiber optic communication standard ITU-T G.975.1 shown in Fig. 6. The encoder uses two concatenated codes, with an outer Reed-Solomon hard-decision code and a soft-decision block-turbo product code using Hamming codes as sub-codes. The soft-decision code utilizes 2-3 soft bits. The decoding involves several iterations that are typical for turbo codes. The outer Reed-Solomon code then corrects the residual errors. The soft-decoding of the inner code is performed using the Chase algorithm as described in R. M. Pyndiah, "Near-Optimum Decoding of Product Codes: Block Turbo Codes", IEEE Transactions on Communications, vol. 46, no. 8, pp.1003-1010, August 1997.

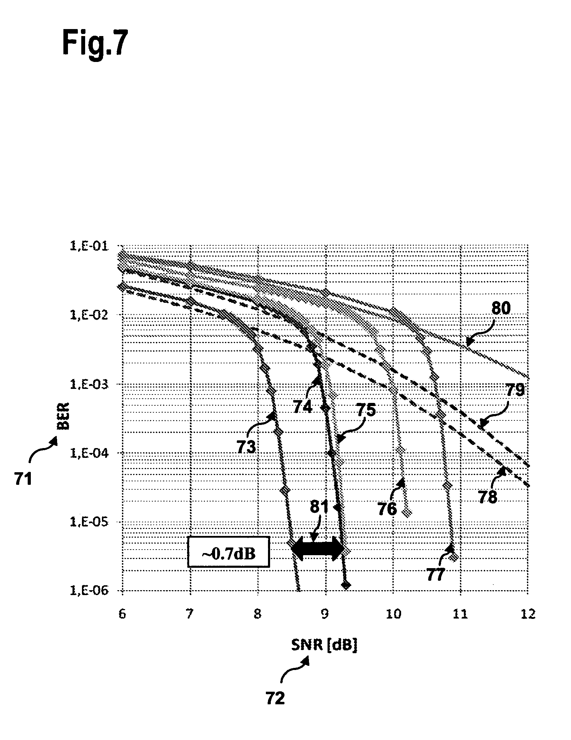

Figure 7 illustrates the performance of the soft differential decoding method in combination with a soft decision forward error correction (FEC) according to an embodiment of the invention. In more detail, Figure 7 shows the bit error rate (BER) of a coherent Quadrature Phase Shift Keying (QPSK) 78 before being processed by a forward error correction (FEC) unit; the BER of a binary differentially decoded QPSK 79 before being processed by a forward error correction (FEC) unit; the BER of a standard soft decoding of QPSK (DQPSK) 80 before being processed by a forward error correction (FEC) unit; the BER of a coherent Phase Shift Keying (QPSK) 73 after being processed by a forward error correction (FEC) unit; the BER of a soft differential decoded QPSK (DQPSK) 74, according to an embodiment of the invention, at 3 bits of non linear quantization (including compression and expansion) and a clipping level of 0.6, after being processed by a forward error correction (FEC) unit (soft-decision FEC); the BER of a soft differential decoded QPSK (DQPSK) 75, according to an embodiment of the invention, at 3 bits of linear quantization and a clipping level of 0.6, after being processed by a forward error correction (FEC) unit (soft-decision FEC); the BER of a soft differential decoded QPSK (DQPSK) 76, according to an embodiment of the invention, at 3 bits of quantization and a clipping level of 1, after being processed by a forward error correction (FEC) unit (soft-decision FEC); the BER of a soft differential decoded QPSK (DQPSK) 77, according to an embodiment of the invention, at 10 bits of quantization and a clipping level of 3, after being processed by a forward error correction (FEC) unit (soft-decision FEC)

Only the performance of the inner soft-code is evaluated, since it is sufficient to describe the overall code performance. The penalty 81 after forward error correction (FEC) decoding is ~0.7dB at 3 bits of quantization and is thus identical to the penalty caused by binary differential decoding. This is the minimum possible penalty that can be achieved without using iterative concatenated convolution codes as discussed before. Decoding with 2 bits quantization gives a penalty of ~0.7dB as well, although it is not shown in Figure 7. Just for comparison, also the FEC performance for different clipping levels is shown. For example, if the clipping level is 0.6, then the signal is quantized between the amplitude of [-0.6; 0.6]. The original signal amplitudes without noise are assumed as [-1; 1]. The optimum choice of the clipping function ensures best performance.

Fig. 7 shows as well the performance for 10 bits of quantization and a high clipping level of 3, which corresponds to a standard soft DQPSK decoding or differential demodulation of QPSK. It is apparent that the output BER of the FEC (after forward error correction) is a function of the input BER (before forward error correction), so that the resulting performance deterioration directly depends on the worse BER before the FEC.

The described method, according to an embodiment of the invention, makes it possible to compute soft information after differential decoding, while having the minimum differential loss of binary decoding.

The described method, according to an embodiment of the invention, can be implemented on an integrated circuit in the digital domain, for example on an application-specific integrated circuit (ASIC), field-programmable gate array (FPGA) or similar technologies. The parameters of quantization in the soft differential decoding algorithm have to be optimized with respect to the given FEC algorithm. The quantization levels in the differential decoder have to be adjusted to the quantization levels of the FEC. No iterations between the differential decoding and FEC are required and they can function in a strictly feed-forward setting.

The present invention is not limited to the details of the above described principles. The scope of the invention is defined by the appended claims and all changes and modifications as fall within the equivalents of the scope of the claims are therefore to be embraced by the invention. Mathematical conversions or equivalent calculations of the signal values based on the inventive method or the use of analogue signals instead of digital values are also incorporated.

**Claims**

1. Signal processing method for coherent receivers receiving a coherent complex signal (51) and extracting orthogonal in-phase (56) and quadrature (57) signal components from the coherent complex signal (51), **characterised by** the steps of

clipping and quantizing each orthogonal signal component (56,57) independently and in an optimized manner with respect to a forward error correction algorithm obtaining clipped and quantized orthogonal signal components (693, 694);

combining (60) said quantized and clipped orthogonal signal components (693, 694) obtaining a first signal (61);

soft differential decoding the first signal (61) obtaining a decoded second signal (65); and
applying the forward error correction algorithm to the second signal (65).

2. Signal processing method according to claim 1, wherein the first signal (61) includes a real part (693) and an imaginary part (694).

3. Signal processing method according to any of the claims 1 or 2, wherein
a clipping level of 0.6 is applied.

4. Signal processing method according to any of the claims 1 or 3, wherein
2 or 3 bits are used for quantization.

5. Signal processing method according to any of the claims 1 to 4, wherein
the coherent complex signal (51) is supplied by a carrier recovery unit (12).

6. Signal processing method according to any of the claims 1 to 5, wherein soft differential decoding the first signal (61) obtaining a second signal (65) includes:

   time-delaying the first signal (61) obtaining a third signal (695);
   complex conjugating the third signal (695) obtaining a fourth signal (696);
   multiplying the fourth signal (696) with the first signal (61) obtaining a fifth signal (692);
   phase shifting the fifth signal (692) obtaining the second signal (65).

7. Signal processing method according to any of the claims 1 to 6, wherein
the coherent complex signal (51) includes a Quadrature Phase Shift Keying (QPSK) signal.

8. Signal processing method according to any of the claims 1 to 7, further comprising:

   clipping the orthogonal signal components (56, 57) independently.

9. Signal processing method according to any of the claims 1 to 8, wherein
quantizing the orthogonal signal components (56, 57) independently includes linear quantization of the orthogonal signal components.

10. Signal processing method according to any of the claims 1 to 9, wherein
quantizing the orthogonal signal components (56, 57) independently includes non linear quantization of the signal components (56, 57).

11. Signal processing method according to claim 10, wherein non linear quantization of the orthogonal signal components (56, 57) includes compression of the orthogonal signal components (56, 57).

12. Signal processing method according to claim 10, wherein non linear quantization of the orthogonal signal components (56, 57) includes expansion of the orthogonal signal components (56, 57).

13. Signal processing arrangement (50) for coherent receivers comprising means for receiving a coherent complex signal (51) and means for extracting (54, 55) orthogonal in-phase (56) and quadrature (57) signal components from the coherent complex signal (51), **characterised by**:

   means for clipping and quantizing (58, 59) the orthogonal in-phase (56) and quadrature (57) signal components independently and in an optimized manner with respect to a forward error correction algorithm;
   means for combining (60) the quantized and clipped orthogonal signal components (693, 694) obtaining a first signal (61), wherein the first signal (61) includes a real part (693) and an imaginary part (694);
   means for soft differential decoding (62) the first signal (61) obtaining a decoded second signal (65); and
   a forward error correction unit (613, 614) receiving the decoded second signal (65).

14. Signal processing arrangement (50) according to claim 13, wherein
the means for clipping and quantizing (58, 59) the orthogonal signal components (56, 57) independently include a quantization and clipping unit (66).

**15.** Signal processing arrangement (50) according to claim 13, wherein
the means for clipping and quantizing (58, 59) the orthogonal signal components (56, 57) independently include a compressor unit (67) configured to perform compression of the orthogonal signal components (56, 57).

**16.** Signal processing arrangement (50) according to claim 13, wherein
the means for clipping and quantizing (58, 59) the orthogonal signal components (56, 57) independently include an expander unit (68) configured to perform expansion of the orthogonal signal components (56, 57).

**17.** Signal processing arrangement (50) according to claim 13, wherein
the means for clipping and quantizing (58, 59) are designed for a clipping level of 0.6 and 2 or 3 bits for quantization.

**Patentansprüche**

**1.** Signalverarbeitungsverfahren für kohärente Empfänger, die ein kohärentes komplexes Signal (51) empfangen und die dem kohärenten komplexen Signal (51) orthogonale In-Phase(56)- und Quadrature(57)-Signalkomponenten entnehmen, wobei das Verfahren durch die folgenden Schritte charakterisiert ist:

Kappen und Quantisieren jeder orthogonalen Signalkomponente (56, 57) unabhängig voneinander und in einer optimierten Weise in Bezug auf einen Vorwärtsfehlerkorrektur-Algorithmus, um gekappte und quantisierte orthogonale Signalkomponenten (693, 694) zu erhalten;
Kombinieren (60) der genannten quantisierten und gekappten orthogonalen Signalkomponenten (693, 694), um ein erstes Signal (61) zu erhalten;
Soft-Differenzialdekodieren des ersten Signals (61), um ein dekodiertes zweites Signal (65) zu erhalten; und
Anwenden des Vorwärtsfehlerkorrektur-Algorithmus auf das zweite Signal (65).

**2.** Signalverarbeitungsverfahren nach Anspruch 1, bei dem das erste Signal (61) einen Realanteil (693) und einen Imaginäranteil (694) umfasst.

**3.** Signalverarbeitungsverfahren nach Anspruch 1 oder 2, bei dem ein Clipping Level von 0,6 angewendet wird.

**4.** Signalverarbeitungsverfahren nach einem der Ansprüche 1 bis 3, bei dem zwei oder drei Bits für eine Quantisierung verwendet werden.

**5.** Signalverarbeitungsverfahren nach einem der Ansprüche 1 bis 4, bei dem das kohärente komplexe Signal (51) von einer Träger-Wiedergewinnungs-Einheit (12) bereitgestellt wird.

**6.** Signalverarbeitungsverfahren nach einem der Ansprüche 1 bis 5, bei dem das Soft-Differenzialdekodieren des ersten Signals (61), um ein zweites Signal (65) zu erhalten, folgendes umfasst:

Zeitverzögern des ersten Signals (61), um ein drittes Signal (695) zu erhalten;
Komplex-Konjugieren des dritten Signals (695), um ein viertes Signal (696) zu erhalten;
Multiplizieren des vierten Signals (696) mit dem dritten Signal (61), um ein fünftes Signal (692) zu erhalten;
Phasenverschieben des fünften Signals (692), um das zweite Signal (65) zu erhalten.

**7.** Signalverarbeitungsverfahren nach einem der Ansprüche 1 bis 6, bei dem das kohärente komplexe Signal (51) ein Quadrature-Phase-Shift-Keying(QPSK)-Signal umfasst.

**8.** Signalverarbeitungsverfahren nach einem der Ansprüche 1 bis 7, das weiterhin Folgendes umfasst:

Kappen der orthogonalen Signalkomponenten (56, 57) unabhängig voneinander.

**9.** Signalverarbeitungsverfahren nach einem der Ansprüche 1 bis 8, bei dem das unabhängige Quantisieren der orthogonalen Signalkomponenten (56, 57) eine lineare Quantisierung der orthogonalen Signalkomponenten umfasst.

**10.** Signalverarbeitungsverfahren nach einem der Ansprüche 1 bis 9, bei dem das unabhängige Quantisieren der orthogonalen Signalkomponenten (56, 57) eine nicht-lineare Quantisierung der Signalkomponenten (56, 57) umfasst.

**11.** Signalverarbeitungsverfahren nach Anspruch 10, bei dem die nicht-lineare Quantisierung der orthogonalen Signalkomponenten (56, 57) eine Komprimierung der orthogonalen Signalkomponenten (56, 57) umfasst.

**12.** Signalverarbeitungsverfahren nach Anspruch 10, bei dem die nicht-lineare Quantisierung der orthogonalen Signalkomponenten (56, 57) eine Ausweitung der orthogonalen Signalkomponenten (56, 57) umfasst.

**13.** Signalverarbeitungsanordnung (50) für kohärente Empfänger, wobei die Signalverarbeitungsanordnung (50) Mittel zum Empfangen eines kohärenten komplexen Signals (51) und Mittel (54, 55) zum Entnehmen orthogonaler In-Phase(56)- und Quadrature(57)-Signalkomponenten aus dem kohärenten komplexen Signal (51) umfasst und durch Folgendes charakterisiert ist:

Mittel (58, 59) zum Kappen und Quantisieren der orthogonalen In-Phase (56)-und-Quadrature (57)-Signalkomponenten unabhängig voneinander und in einer optimierten Weise in Bezug auf einen Vorwärtsfehlerkorrektur-Algorithmus;
Mittel (60) zum Kombinieren der quantisierten und gekappten orthogonalen Signalkomponenten (693, 694), um ein erstes Signal (61) zu erhalten, wobei das erste Signal (61) einen Realanteil (693) und einen Imaginäranteil (694) umfasst;
Mittel (62) zum Soft-Differenzialdekodieren des ersten Signals (61), um ein dekodiertes zweites Signal (65) zu erhalten; und
eine Vorwärtsfehlerkorrektureinheit (613, 614) zum Empfangen des dekodierten zweiten Signals (65).

**14.** Signalverarbeitungsanordnung (50) nach Anspruch 13, bei der die Mittel (58, 59) für das unabhängige Kappen und Quantisieren der orthogonalen Signalkomponenten (56, 57) eine Quantisierungs-Und-Kappungseinheit (66) umfassen.

**15.** Signalverarbeitungsanordnung (50) nach Anspruch 13, bei der die Mittel (58, 59) für das unabhängige Kappen und Quantisieren der orthogonalen Signalkomponenten (56, 57) eine Komprimierungseinheit (67) umfassen, die dazu eingerichtet ist, die orthogonalen Signalkomponenten (56, 57) zu komprimieren.

**16.** Signalverarbeitungsanordnung (50) nach Anspruch 13, bei der die Mittel (58, 59) für das unabhängige Kappen und Quantisieren der orthogonalen Signalkomponenten (56, 57) eine Ausweitungseinheit (68) umfassen, die dazu eingerichtet ist, die orthogonalen Signalkomponenten (56, 57) auszuweiten.

**17.** Signalverarbeitungsanordnung (50) nach Anspruch 13, bei der die Mittel (58, 59) zum Kappen und Quantisieren für ein Clipping Level von 0,6 und für zwei oder drei Bits zum Quantisieren ausgelegt sind.

## Revendications

**1.** Procédé de traitement de signal pour des récepteurs cohérents recevant un signal complexe cohérent (51) et extrayant les composantes de signal en phase (56) et en quadrature (57) orthogonales du signal complexe cohérent (51), **caractérisé par** les étapes
d'écrêtage et de quantification de chaque composante de signal orthogonale (56, 57) de manière indépendante et d'une manière optimisée en relation avec un algorithme de correction d'erreur à anticipation, obtenant des composantes de signal orthogonales écrêtées et quantifiées (693, 694) ;
de combinaison (60) desdites composantes de signal orthogonales quantifiées et écrêtées (693, 694), obtenant un premier signal (61) ;
de décodage différentiel pondéré du premier signal (61), obtenant un deuxième signal décodé (65) ; et
d'application de l'algorithme de correction d'erreur à anticipation au deuxième signal (65).

**2.** Procédé de traitement de signal selon la revendication 1, dans lequel
le premier signal (61) comprend une partie réelle (693) et une partie imaginaire (694).

**3.** Procédé de traitement de signal selon l'une quelconque des revendications 1 et 2, dans lequel
un niveau d'écrêtage de 0,6 est appliqué.

**4.** Procédé de traitement de signal selon l'une quelconque des revendications 1 et 3, dans lequel
2 ou 3 bits sont utilisés pour la quantification.

**5.** Procédé de traitement de signal selon l'une quelconque des revendications 1 à 4, dans lequel le signal complexe cohérent (51) est délivré par une unité de récupération de porteuse (12).

**6.** Procédé de traitement de signal selon l'une quelconque des revendications 1 à 5, dans lequel un décodage différentiel pondéré du premier signal (61) obtenant un deuxième signal (65) comprend :

le retard dans le temps du premier signal (61), obtenant un troisième signal (695) ;
la conjugaison complexe du troisième signal (695), obtenant un quatrième signal (696) ;
la multiplication du quatrième signal (696) par le premier signal (61), obtenant un cinquième signal (692) ;
le déphasage du cinquième signal (692), obtenant le deuxième signal (65).

**7.** Procédé de traitement de signal selon l'une quelconque des revendications 1 à 6, dans lequel le signal complexe cohérent (51) comprend un signal QPSK (modulation par déplacement de phase en quadrature).

**8.** Procédé de traitement de signal selon l'une quelconque des revendications 1 à 7, comprenant en outre :

l'écrêtage des composantes de signal orthogonales (56, 57) de manière indépendante.

**9.** Procédé de traitement de signal selon l'une quelconque des revendications 1 à 8, dans lequel la quantification des composantes de signal orthogonales (56, 57) de manière indépendante comprend la quantification linéaire des composantes de signal orthogonales.

**10.** Procédé de traitement de signal selon l'une quelconque des revendications 1 à 9, dans lequel la quantification des composantes de signal orthogonales (56, 57) de manière indépendante comprend la quantification non linéaire des composantes de signal (56, 57).

**11.** Procédé de traitement de signal selon la revendication 10, dans lequel la quantification non linéaire des composantes de signal orthogonales (56, 57) comprend la compression des composantes de signal orthogonales (56, 57).

**12.** Procédé de traitement de signal selon la revendication 10, dans lequel la quantification non linéaire des composantes de signal orthogonales (56, 57) comprend la décompression des composantes de signal orthogonales (56, 57).

**13.** Agencement de traitement de signal (50) pour des récepteurs cohérents comprenant des moyens pour recevoir un signal complexe cohérent (51) et des moyens pour extraire (54, 55) les composantes de signal en phase (56) et en quadrature (57) orthogonales du signal complexe cohérent (51), **caractérisé par** :

des moyens pour écrêter et quantifier (58, 59) les composantes de signal en phase (56) et en quadrature (57) orthogonales de manière indépendante et d'une manière optimisée en relation avec un algorithme de correction d'erreur à anticipation ;
des moyens pour combiner (60) les composantes de signal orthogonales quantifiées et écrêtées (693, 694), obtenant un premier signal (61), dans lequel le premier signal (61) comprend une partie réelle (693) et une partie imaginaire (694) ;
des moyens pour effectuer le décodage différentiel pondéré (62) du premier signal (61), obtenant un deuxième signal décodé (65) ; et
une unité de correction d'erreur à anticipation (613, 614) recevant le deuxième signal décodé (65).

**14.** Agencement de traitement de signal (50) selon la revendication 13, dans lequel les moyens pour écrêter et pour quantifier (58, 59) les composantes de signal orthogonales (56, 57) de manière indépendante comprennent une unité de quantification et d'écrêtage (66).

**15.** Agencement de traitement de signal (50) selon la revendication 13, dans lequel les moyens pour écrêter et quantifier (58, 59) les composantes de signal orthogonales (56, 57) de manière indépendante comprennent une unité de compression (67) configurée pour effectuer la compression des composantes de signal orthogonales (56, 57).

**16.** Agencement de traitement de signal (50) selon la revendication 13, dans lequel

les moyens pour écrêter et quantifier (58, 59) les composantes de signal orthogonales (56, 57) de manière indépendante comprennent une unité de décompression (68) configurée pour effectuer la décompression des composantes de signal orthogonales (56, 57).

17. Agencement de traitement de signal (50) selon la revendication 13, dans lequel
les moyens pour écrêter et quantifier (58, 59) sont conçus pour un niveau d'écrêtage de 0,6 et 2 ou 3 bits pour la quantification.

Fig.1

y-pol.

x-pol.

optical 90°hybrid

PBS

PolMUX signal

LO

ADC

ADC

ADC

ADC

Dispersion compensation

Timing recovery

FIR butterfly equalizer

Carrier recovery

Forward error correction

yi

yq

xi

xq

YI

YQ

XI

XQ

y

x

3  7  9  10  11  12  13

8

5

2  6

1

4

14

# Fig.2

# Fig.3

# Fig.4

# FIG 5

Noise limiting — 52

51
r(t)

54 Re(.)
56
58 Quanti-zation
693

55 Im(.)
57
59 Quanti-zation
694

60 ⊕

61

Differential soft decoding — 62

691 ⊗
692
69 e^{jπ/4}
65 z(t)

63 T
695
64 conj(.)
696

Compressor 67 → Quant. &Clipping 66 → Expander 68

50

EP 2 383 949 B1

# Fig.6

**611**

244736 data bits
(≈ 2 ODUk frames)
+
124 bits padding

RS encoder
RS(1901,1855)
× 12 interleaves

#12
#n
#1

250932 data bits
(=12×RS(1901,1855))

68 bits padding

**612**

Product encoder
(512,502) × (510,500)
Extended hamming
code

261120 data bits
(≈ 2 OTUk frames)

**615**

transmission line

**613**

Product decoder
(512,502) × (510,500)
Extended hamming
code

n iterations

G.975.1_FL15

RS decoder
RS(1901,1855)
× 12 interleaves

#12
#n
#1

**614**

# Fig.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. MARSLAND ; P. T. MATHIOPOULOS.** On the Performance of Iterative Noncoherent Detection of Coded M-PSK Signals. *IEEE Transactions on Communications,* April 2000, vol. 48 (4), 588-596
- **PETER HOEHER.** Senior Member. IEEE
- **JOHN LODGE.** Turbo DPSK": Iterative Differential PSK Demodulation and Channel Decoding. *IEEE Transactions on Communications,* June 1999, vol. 47 (6), 837-843
- Coherent MAP Detection of DQPSK Signals in non-ISI Channels. **H. ARSLAN ; G.E. BOTTOMLEY ; R. RAMESH ; G. BRISMARK.** Wireless Communications and Networking Conference. IEEE, 1999
- **L. LAMPE et al.** *Coded Modulation for DPSK on Fading Channels*
- **H. LEIB et al.** Data-Aided Noncoherent Demodulation of DPSK. *IEEE Trans. Comm.,* 1995, vol. 43, 722

- **S. CALABRÒ et al.** Improved Detection of differential Phase Shift Keying through Multi-Symbol Phase Estimation. *ECOC,* 2005
- **ZHANG et al.** ADC bandwidth optimization in coherent optical polarization multiplexing quadrature phase-shift keying system. *Communications and Photonics Conference and Exhibition 2009,* 11 February 2009, ISBN 978-1-55752-877-3, 1-6
- Optimal Polarization Demultiplexing for Coherent Optical Communications Systems. **ROUDAS et al.** Journal of Lightwave Technology. IEEE, 04 January 2010, vol. 28, 1121-1134
- **FULVIO et al.** Generalized Differential Encoding: A Nonlinear Signal Processing Perspective. *IEEE Transactions on Signal processing,* 11 January 1998, vol. 46 (11), ISBN 1053-587
- **R. M. PYNDIAH.** Near-Optimum Decoding of Product Codes: Block Turbo Codes. *IEEE Transactions on Communications,* August 1997, vol. 46 (8), 1003-1010